# EUROPEAN PATENT APPLICATION

(11) **EP 3 588 646 A1**
(43) Date of publication of application: **01.01.2020**
(21) Application number: 19179280.3
(22) Date of filing: 10.06.2019
(51) Int. Cl.: H01M 8/04089, H01M 8/04119, H01M 8/04303, H01M 8/0438, H01M 8/04992, H01M 8/0612, H01M 8/04014

(54) **FUEL CELL SYSTEM**

(30) Priority: 29.06.2018 KR 20180075107
(71) Applicant: Kyungdong Navien Co., Ltd., Pyeongtaek-si, Gyeonggi-do 17704 (KR)
(72) Inventor: Park, Se Jin, 08501 Geumcheon-Gu (KR); Yi, Yong, 08501 Geumcheon-Gu (KR); Shin, Seock Jae, 08501 Geumcheon-Gu (KR); Kim, Min Soo, 08501 Geumcheon-Gu (KR)
(74) Representative: Beck Greener LLP

(57) **Abstract**

Provided is a fuel cell system (100). The fuel cell system includes a fuel cell stack (200) including a cathode (220) receiving air and an anode (210) receiving fuel, a first valve (410) configured to be disposed on an anode supply line (510), which supplies the fuel to the anode, a second valve (420) configured to be disposed on an anode exhaust line (521), which discharges an anode exhaust gas from the anode, and a controller configured to close the first valve and the second valve to prevent the air from being introduced into the fuel cell stack when the fuel cell stack stops.

## Description

The present disclosure relates to a fuel cell system, and more particularly, to a fuel cell system which protects a fuel cell stack.

A fuel cell is a device for converting chemical energy of fuel into electrical energy. The fuel cell is a power generation system which produces electricity by electrochemically reacting hydrogen in a reformed gas obtained by reforming the fuel such as a natural gas and oxygen in air, at an anode and a cathode of a stack.

The fuel cell system is classified into a polymer electrolyte membrane fuel cell (PEMFC), a direct methanol fuel cell (DMFC), a molten carbonate fuel cell (MCFC), a solid oxide fuel cell (SOFC), an alkaline fuel cell (AFC), and the like. In recent years, the solid oxide fuel cell (SOFC) has been spotlighted because a reformer is capable of being relatively simplified, various types of fuel are used because there is no problem of poisoning of a catalyst against carbon monoxide, and dependency of an expensive catalyst is lower than that of the other fuel cells due to operating at a high temperature.

In the fuel cell system, supply of the fuel and the air stops upon normal system shutdown or abnormal system shutdown in an emergency situation. In this case, when the air is introduced into a fuel cell stack, components constituting the fuel cell may be oxidized to lower durability of the fuel cell.

For example, in the anode of the solid oxide fuel cell (SOFC), a metal in a reduced state is used. In the case of nickel (Ni) used as the anode, for example, the system operation stops and oxygen is introduced, so that nickel is oxidized to nickel oxide. When a material included in the stack is oxidized, the cell may be destroyed due to volume expansion thereof, which makes it impossible to operate the fuel cell system, and the expensive stack should be replaced.

To this end, there is a method of supplying an inert gas such as nitrogen when the system stops. However, it is difficult to install a nitrogen supply device in the field.

The present disclosure seeks to solve the above-mentioned problems occurring in the prior art while advantages achieved by the prior art are maintained intact.

An aspect of the present disclosure provides a fuel cell system which prevents external air from introducing into an anode when the fuel cell system stops to prevent oxidation of the anode by the external air.

In addition, the present disclosure provides a fuel cell system which prevents air introduced into an anode by adjusting a pressure of the anode when the fuel cell system stops to prevent oxidation of the anode.

The technical problems to be solved by the present inventive concept are not limited to the aforementioned problems, and any other technical problems not mentioned herein will be clearly understood from the following description by those skilled in the art to which the present disclosure pertains.

According to an aspect of the present invention, there is provided a fuel cell system, comprising a fuel cell stack including a cathode receiving air and an anode receiving fuel; a first valve configured to be disposed on an anode supply line, which supplies the fuel to the anode; a second valve configured to be disposed on an anode exhaust line, which discharges an anode exhaust gas from the anode; and a controller configured to close the first valve and the second valve to prevent the air from being introduced into the fuel cell stack when the fuel cell stack stops.

In embodiments, the fuel cell system further comprises a burner receiving a fuel gas and the air and operating as a heat source; wherein the fuel gas supplied to the burner includes the anode exhaust gas supplied from the anode through the anode exhaust line; and wherein the second valve is disposed on the anode exhaust line, which connects the anode to the burner.

In embodiments, the fuel cell system further comprises a reformer receiving a fuel gas and generating a reformed gas by a reforming reaction to discharge the reformed gas to the anode; wherein the anode supply line includes a fuel gas supply line which is disposed upstream of the reformer to receive the fuel gas and is provided with the first valve, and a reformed gas supply line which is disposed upstream of the reformer to supply the reformed gas from the reformer to the anode.

In embodiments, the fuel cell system further comprises a pressure regulator adjusting a pressure of the anode to prevent air of the cathode from being introducing into the anode when the fuel cell stack stops and the first valve and the second valve are closed.

In embodiments, the fuel cell system further comprises a cooler cooling the anode exhaust gas discharged from the anode and being disposed upstream of the second valve on the anode exhaust line; wherein the cooler includes a cooling water tank accommodating cooling water and being disposed to allow internal air to communicate with the anode through the anode exhaust line and being disposed to allow the cooling water to be opened to the atmosphere such that a pressure difference between the anode and the cathode minimizes through an atmospheric pressure. In some of these embodiments, the cooler includes a communication line, in which the cooling water communicates with the atmosphere, including a trap which prevents an outside air from being introduced into the cooling water tank. Alternatively or additionally, the trap includes a first trap being connected to the cooling water tank and being formed in a U-shape such that water is capable of being stagnate. Alternatively or additionally, the communication line further includes a third valve, which is disposed at a downstream of the trap and at a side communicating with the atmosphere, and closes and opens the communication line. In some embodiments, the third valve is closed when the fuel cell stack operates and is opened when the fuel cell stack stops.

In some embodiments, the trap includes a second trap being connected to the cooling water tank and being provided in a U-shape; a third trap being disposed downstream of the second trap continuously and being provided in a U-shape; and a fourth trap being disposed upstream of the third trap, being disposed at a position higher than the third trap, providing an accommodation space for accommodating water in the fourth trap.

In some embodiments, a volume of the fourth trap is 20 to 150% of a volume of the third trap.

The above and other objects, features and advantages of the present disclosure will be more apparent from the following detailed description taken in conjunction with the accompanying drawings:
FIG. 1 is a schematic view illustrating a fuel cell system;
FIG. 2 is a view illustrating a cooler applied to a fuel cell system; and
FIG. 3 is a view illustrating another a cooler applied to a fuel cell system.

Hereinafter, preferred embodiments of the present invention will be described in detail with reference to the accompanying drawings.

First, the embodiments described below are embodiments suitable for understanding the technical characteristics of a fuel cell system of the present disclosure. However, the technical features of the present disclosure are not limited by the embodiments to which the present disclosure is applied or explained in the following embodiments, and various modifications are possible within the technical scope of the appending claims.

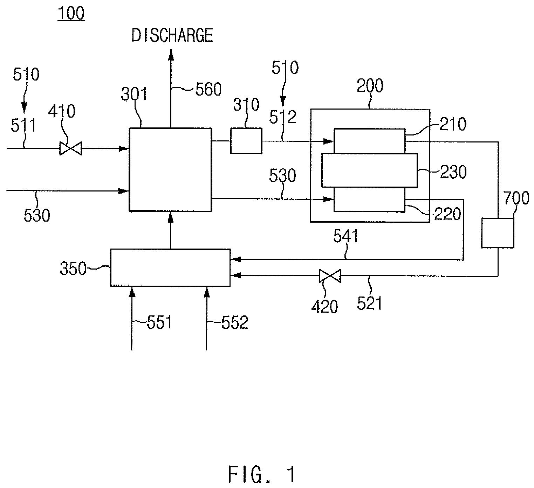

FIG. 1 is a schematic view of a fuel cell system 100 applied to the present disclosure.

Referring to FIG. 1, the fuel cell system 100 includes a fuel cell stack 200. The fuel cell stack 200 may include a cathode 220 receiving air, an anode 210 receiving fuel, and an electrolyte 230. In this case, particularly, the anode 210 may include a component which is oxidized when the air is introduced. An anode supply line 510 supplying the fuel or a reformed gas may be connected to an upper stream of the anode 210 and an anode exhaust line 521 exhausting an anode exhaust gas from the anode may be connected to a downstream of the anode 210. In addition, a cathode supply line 530 supplying the air may be connected to an upper stream of the cathode 220 and a cathode exhaust line 541 exhausting a cathode exhaust gas may be connected to a downstream of the cathode 220.

In addition, the fuel cell system 100 may further include a burner 350 and a heat exchanger 301. The heat exchanger 301 may apply heat to the fuel and the air supplied from the outside to be a temperature suitable for being supplied to the fuel cell stack 200. The burner 350 may receive a fuel gas and the air to generate a combustion exhaust gas having a high temperature and the generated combustion exhaust gas may be supplied as a heat source in the fuel cell system 100.

When the fuel cell system 100 stops, supply of the air and the fuel to the fuel cell stack 200 shuts off. In this case, although the fuel cell system 100 stops, external air may be introduced into the anode 210 through the anode supply line 510 and the anode exhaust line 521 to oxidize the anode 210.

Although the external air introduced into the anode supply line 510 and the anode exhaust line 521 shuts off, a pressure of the anode is decreased when the fuel cell system 100 stops, and therefore oxygen of the cathode 220 may flow backward (crossover, permeation) to the anode 210. In detail, when the fuel cell system 100 stops, a reaction of the anode 210 stops and a temperature of the anode 210 is decreased, thereby decreasing the pressure of the anode 210. When the pressure of the anode 210 is decreased, oxygen in the cathode 220 having a relatively high pressure may flow backward to the anode 210, thereby causing oxidation at the anode 210. Thus, when the fuel cell system 100 stops, it is necessary to keep the pressure of the anode 210 not to be less than the pressure of the cathode 220 to prevent backflow from the anode exhaust line 521 and oxidation of the anode 210 by the air introduced from the cathode 220.

Referring to FIG. 1, the fuel cell system 100 according to an embodiment of the present disclosure includes the fuel cell stack 200, a first valve 410, a second valve 420, and a controller.

The fuel cell stack 200 may include the cathode 220 receiving the air, the anode 210 receiving the fuel, and the electrolyte 230, as described above.

The first valve 410 may be disposed on the anode supply line 510 for supplying the fuel to the anode 210. The second valve 420 may be disposed on the anode exhaust line 521 for exhausting the anode exhaust gas from the anode 210.

The controller may close the first valve 410 and the second valve 420 to prevent the air from being introduced into the fuel cell stack 200 when the fuel cell stack 200 stops.

According to the present disclosure, when the fuel cell system 100 stops, the controller may close the first valve 410 and the second valve 420, and therefore the external air may be prevented from being introduced into the anode 210 through the anode supply line 510 and the anode exhaust line 521, which are connected to the anode 210.

Therefore, according to the present disclosure, oxidation in the anode due to oxygen-containing air which is introduced from the outside may be prevented, in advance.

In detail, referring to FIG. 1, the fuel cell system 100 according to the present disclosure may further include a reformer 310. The reformer 310 may receive the fuel gas to generate a reformed gas by a reforming reaction, thereby discharging the reformed gas to the anode 210.

In addition, the anode supply line 510 may include a fuel gas supply line 511 which is disposed upstream of the reformer 310 to receive the fuel gas and is provided with the first valve 410 and a reformed gas supply line 512 which is provided downstream of the reformer 310 to supply the reformed gas from the reformer 310 to the anode 210.

In detail, the first valve 410 may be installed in the fuel gas supply line 511 upstream of the reformer 310. Further, even after the fuel cell system 100 stops, the reformer 310 may continue the reforming reaction until a temperature, at which the reforming reaction is possible, is reached and may continuously supply the reformed gas to the anode 210. Accordingly, the pressure of the anode 210 may be maintained or increased by the supply of the reformed gas.

Meanwhile, a position of the first valve 410 is not limited to the above, and the first valve 410 may be installed in the reformed gas supply line 512 on condition that the external air is prevented from being introduced into the anode 210.

Meanwhile, the fuel cell system 100 may further include the burner 350. The burner 350 may receive the fuel gas and the air and may operate as a heat source. For example, the burner 350 may provide the heat source for driving the fuel cell stack 200 through the generated combustion exhaust gas. In addition, the fuel gas supplied to the burner 350 may include the anode exhaust gas supplied from the anode 210 through the anode exhaust line 521 and the second valve 420 may be installed on the anode exhaust line 521, which is connected between the anode 210 and the burner 350.

In detail, the burner 350 may supply the heat source for operating the fuel cell. That is, the burner 350 may generate the high temperature combustion exhaust gas by receiving the fuel gas and the air, and the generated high temperature combustion exhaust gas may be provided as the heat source necessary for the fuel cell stack 200. For example, the burner 350 may transmit heat to the reformer 310 to provide the heat necessary for the reforming reaction or to heat the air introduced into the cathode 220.

The burner 350 may receive the air from the cathode 220 through the cathode exhaust line 541 and may receive the fuel gas from the anode 210 through the anode exhaust line 521. In addition to the gas discharged from the fuel cell stack 200, the burner 350 may separately receive a fuel gas and air through a burner fuel supply line 551 and a burner air supply line 552. Further, the combustion exhaust gas generated in the burner 350 may be exhausted through a combustion gas line 560 after transferring the heat through the heat exchanger 301.

Meanwhile, a flow of the combustion exhaust gas generated by the burner 350 is not limited to the above, and various modifications may be made.

In addition, the second valve 420 may be installed upstream of the burner 350 by being installed at the anode exhaust line 521. Thus, according to the present disclosure, backflow of the external air to the anode 210 may be effectively prevented as compared with the case where the second valve 420 is installed at the combustion gas line 560, which is a downstream of the burner 350.

Meanwhile, a position of the second valve 420 is not limited to the above, and the second valve 420 may be variously disposed on a line which exhausts the anode discharge gas on condition that the external air is prevented from flowing backward to the anode 210.

In this case, the air supplied from the outside may be supplied to the cathode 220 through the cathode supply line 530.

Meanwhile, the fuel cell system 100 according to the present disclosure may further include a pressure regulator. The pressure regulator may control the pressure of the anode 210 to prevent the air of the cathode 220 from being introduced into the anode 210 when the fuel cell stack 200 stops and the first valve 410 and the second valve 420 are closed.

In this case, a configuration of the pressure regulator is not limited, and various configurations may be applied on condition that the pressure of the anode 210 is adjusted not to be lower than the pressure of the cathode 220 when the fuel cell stack 200 stops. For example, the pressure regulator may be implemented by a cooling water tank 710 of a cooler 700, which will be described later.

In detail, the present disclosure may further include the cooler 700. The cooler 700 may cool the anode exhaust gas discharged from the anode 210. The cooler 700 may be disposed on the anode exhaust line 521, and may be disposed upstream of the second valve 420.

In addition, the cooler 700 may include the cooling water tank 710. The cooling water tank 710 may accommodate cooling water W1 therein and the internal air may communicate with the anode 210 through the anode exhaust line 521. Further, the cooling water tank 710 may be opened to the atmosphere so that the cooling water W1 contained therein may communicate with the atmosphere. Accordingly, a pressure difference between the anode 210 and the cathode 220 may be minimized through atmospheric pressure.

In detail, after the fuel cell system 100 stops and the first valve 410 and the second valve 420 shuts off, the pressure of the anode 210 may be decreased as the temperature of the anode 210 is decreased. Here, a pressure P1 of the gas inside the cooling water tank 710 communicating with the anode 210 through the anode exhaust line 521 may also be lowered. In this case, the atmospheric pressure (an external pressure, P2) may be applied inside the cooling water tank 710 because the cooling water tank 710 is opened to the atmosphere. The pressure P1 of the gas inside the cooling water tank 710 is kept equal to the atmosphere by the atmospheric pressure (the external pressure P2), so that the pressure of the anode 210 may be kept close to the pressure of the cathode 220.

Meanwhile, the cooler 700 may further include a communication line 730. One end of the communication line 730 may be connected to the cooling water tank 710 and the other end of the communication line 730 may be connected to the combustion gas line 560 to be opened to the atmosphere. As a result, the cooler 700 may open the cooling water W1 contained in the cooling water tank 710 to the atmosphere.

In addition, the communication line 730 may include a trap 740. The trap 740 may prevent backflow of the external air to the cooling water tank 710 through the other end of the combustion gas line 560 connected to the communication line 730, which is opened.

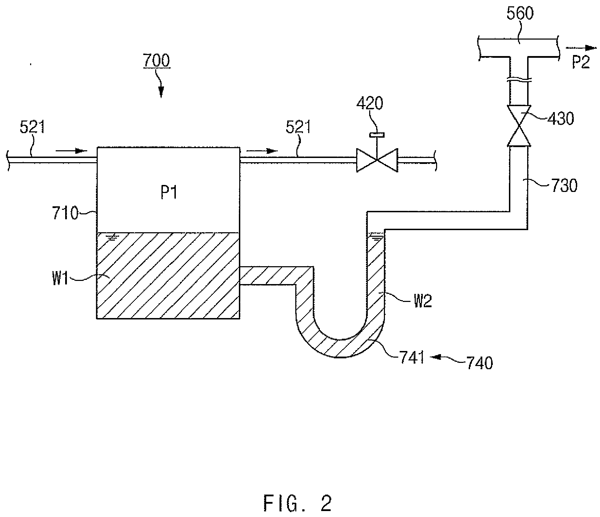

Referring to FIG. 2, in detail, the trap 740 may include a first trap 741. The first trap 741 may be provided in a U-shape and may allow water W2 to be maintained in a stagnant state therein for blocking the external air. In this case, the water W2 stagnant in the first trap 741 may be the cooling water W1 of the cooling water tank 710.

Even when the air pressure P1 inside the cooling water tank 710 is decreased and the water W2 of the first trap 741 flows to the cooling water tank 710 due to the pressure P2, the water W2 stagnant in the first trap 741 may remain in the first trap 741, thereby preventing the external air from being introduced into the cooling water tank 710 through the communication line 730.

Meanwhile, the communication line 730 may further include a third valve 430. The third valve 430 may be disposed at a downstream of the trap 740 and at a side which communicates with the atmosphere and may open/close the communication line 730. The third valve 430 may be closed when the fuel cell system normally operates and may be opened when the fuel cell system stops.

Specifically, when the internal pressure of the fuel cell system is high during operation of the fuel cell system, a problem in which the water W1 stored in the cooling water tank 710 and the water W2 in the first trap 741 are discharged to the outside through the communication line 730 may occur. According to the present disclosure, the water W1 stored in the cooling water tank 710 and the water W2 of the first trap 741 may be prevented from being discharged to the outside by the third valve 430 even when the internal pressure is high during the operation of the fuel cell system.

Meanwhile, the prevention of the water W1 stored in the cooling water tank 710 and the water W2 of the first trap 741 from being discharged to the outside may not necessarily dependent on the third valve 430 but may be performed by various methods. For example, the water W1 stored in the cooling water tank 710 and the water W2 of the first trap 741 may be blocked from the outside through a head of the first trap 741.

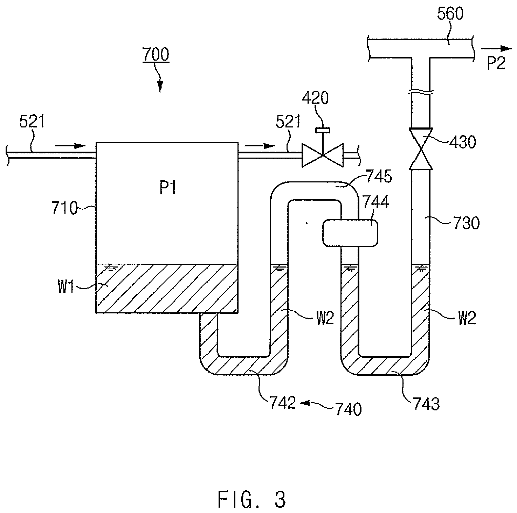

Fig. 3 illustrates another embodiment of the cooler 700 according to the present disclosure. The other embodiment shown in FIG. 3 differs from the embodiment shown in FIG. 2 in the specific configuration of the communication line 730.

Referring to FIG. 3, according to another embodiment, the trap 740 may include a second trap 742, a third trap 743, and a fourth trap 744.

The second trap 742 may be provided in a U-shape and the water W2 may be maintained in a stagnate state to block the external air. Further, the third trap 743 may be connected to the second trap 742 continuously and may be provided in a U-shape, and the water W2 may be maintained in the stagnate state to block the external air. A role of the stagnate water W2 in the second trap 742 and the third trap 743 is the same as the water W2 in the first trap 741 in the embodiment described above. An upper end connector 745 may be connected between the second trap 742 and the third trap 743.

The trap 740 according to another embodiment of the present disclosure may include two traps each having a U-shaped structure to more effectively block the inflow of outside air.

The fourth trap 744 may be disposed at a position higher than the third trap 743 upstream of the third trap 743 and may be provided with an accommodation space in which the water W2 is contained. For example, the fourth trap 744 may be disposed between the second trap 742 and the third trap 743, and may be disposed adjacent to the upper end connector 745. That is, the fourth trap 744 may be disposed at a higher position than the second and third traps 742 and 743. Further, the fourth trap 744 may be provided with the accommodation space for containing the water W2 therein. Accordingly, when the water W2 of the third trap 743 flows backward, the water W2 flowing backward may be collected and accommodated in the accommodation space of the fourth trap 744.

Therefore, when the internal pressure P1 of the cooling water tank 710 abruptly drops, the fourth trap 744 may prevent all the water W2 of the trap 740 from flowing into the inside of the cooling water tank 710, thereby preventing the outside air from being introduced into the inside of the cooling water tank 710.

In addition, a volume of the fourth trap 744 may be 20 to 150% of a volume of the third trap 743.

As described above, because the ratio of the volume of the fourth trap 744 is fixed, the second trap 742 may be prevented from being opened. Therefore, all the water W2 of the second and third traps 742 and 743 may be effectively prevented from flowing into the inside of the cooling water tank 710.

Meanwhile, the ratio of the volume of the fourth trap 744 is not limited to the described above, and may be varied in various ranges on condition that the water W2 of the trap 740 may be prevented from flowing backward.

Therefore, even when the cooling water tank 710 is opened to the atmosphere, the trap 740 effectively prevents the external air from flowing backward to the anode 210 through the cooling water tank 710. As described above, as the fuel cell system according to the present disclosure is used, the external air may be prevented from flowing into the anode through the anode supply line and the anode exhaust line, which are connected to the anode when the fuel cell system stops. Accordingly, the present disclosure may prevent the anode from generating oxidation by the oxygen-contained air introduced from the outside, in advance.

Further, according to the present disclosure, the cooling water tank which is opened to the atmosphere may be provided to increase the pressure of the air inside the cooling water tank by the external pressure (the atmospheric pressure), thereby minimizing the pressure difference between the anode and the cathode. Thus, oxidation in the anode due to the air introduced from the cathode may be prevented, in advance.

In addition, according to the present disclosure, even when the cooling water tank is opened to the atmosphere, the outside air may be effectively prevented from flowing backward to the anode through the cooling water tank.

Hereinabove, although the present disclosure has been described with reference to exemplary embodiments and the accompanying drawings, the present disclosure is not limited thereto, but may be variously modified and altered by those skilled in the art to which the present disclosure pertains without departing from the scope of the following claims.

## Claims

1. A fuel cell system, comprising:
a fuel cell stack including a cathode receiving air and an anode receiving fuel;
a first valve configured to be disposed on an anode supply line, which supplies the fuel to the anode;
a second valve configured to be disposed on an anode exhaust line, which discharges an anode exhaust gas from the anode; and
a controller configured to close the first valve and the second valve to prevent the air from being introduced into the fuel cell stack when the fuel cell stack stops.

2. A fuel cell system according to claim 1, further comprising:
a burner receiving a fuel gas and the air and operating as a heat source;
wherein the fuel gas supplied to the burner includes the anode exhaust gas supplied from the anode through the anode exhaust line; and
wherein the second valve is disposed on the anode exhaust line, which connects the anode to the burner.

3. A fuel cell system according to claim 1, further comprising:
a reformer receiving a fuel gas and generating a reformed gas by a reforming reaction to discharge the reformed gas to the anode;
wherein the anode supply line includes a fuel gas supply line which is disposed upstream of the reformer to receive the fuel gas and is provided with the first valve, and a reformed gas supply line which is disposed upstream of the reformer to supply the reformed gas from the reformer to the anode.

4. A fuel cell system according to claim 1, further comprising a pressure regulator adjusting a pressure of the anode to prevent air of the cathode from being introducing into the anode when the fuel cell stack stops and the first valve and the second valve are closed.

5. A fuel cell system according to claim 1, further comprising:
a cooler cooling the anode exhaust gas discharged from the anode and being disposed upstream of the second valve on the anode exhaust line;
wherein the cooler includes a cooling water tank accommodating cooling water and being disposed to allow internal air to communicate with the anode through the anode exhaust line and being disposed to allow the cooling water to be opened to the atmosphere such that a pressure difference between the anode and the cathode minimizes through an atmospheric pressure.

6. A fuel cell system according to claim 5, wherein the cooler includes a communication line, in which the cooling water communicates with the atmosphere, including a trap which prevents an outside air from being introduced into the cooling water tank.

7. A fuel cell system according to claim 6, wherein the trap includes a first trap being connected to the cooling water tank and being formed in a U-shape such that water is capable of being stagnate.

8. A fuel cell system according to claim 6, wherein the communication line further includes a third valve, which is disposed at a downstream of the trap and at a side communicating with the atmosphere, and closes and opens the communication line.

9. A fuel cell system according to claim 8, wherein the third valve is closed when the fuel cell stack operates and is opened when the fuel cell stack stops.

10. A fuel cell system according to claim 6, wherein the trap includes:
a second trap being connected to the cooling water tank and being provided in a U-shape;
a third trap being disposed downstream of the second trap continuously and being provided in a U-shape; and
a fourth trap being disposed upstream of the third trap, being disposed at a position higher than the third trap, providing an accommodation space for accommodating water in the fourth trap.

11. A fuel cell system according to claim 10, wherein a volume of the fourth trap is 20 to 150% of a volume of the third trap.
